Europäisches Patentamt

European Patent Office

Office européen des brevets

(19)

(11) Numéro de publication : **0 297 998 B1**

# (12) FASCICULE DE BREVET EUROPEEN

(45) Date de publication du fascicule du brevet :
**10.04.91 Bulletin 91/15**

(51) Int. Cl.$^5$ : **C01G 15/00, C22B 58/00**

(21) Numéro de dépôt : **88420176.5**

(22) Date de dépôt : **01.06.88**

(54) Procédé d'extraction et de purification du gallium des liqueurs Bayer.

(30) Priorité : **02.06.87 FR 8708013**

(43) Date de publication de la demande :
**04.01.89 Bulletin 89/01**

(45) Mention de la délivrance du brevet :
**10.04.91 Bulletin 91/15**

(84) Etats contractants désignés :
**AT CH DE ES FR GB GR IT LI NL SE**

(56) Documents cités :
EP-A- 0 054 461
EP-A- 0 102 280
EP-A- 0 102 882
EP-A- 0 206 081
EP-A- 0 258 146
EP-A- 0 265 356
US-A- 3 637 711
US-A- 4 468 374
US-A- 4 631 177
CHEMICAL ABSTRACTS, vol. 104, 1986, page 567, résumé no. 14014k, Columbus, Ohio, US; L. BOKOBZA et al.: "Spectroscopic investigation of adsorbed 7-(4-ethyl-1-methyloctyl)-8-quinolinol(Kelex 100) and of its gallium(III) complex; comparison with the behaviors observed in solvent extraction systems", && POLYHEDRON 1985, 4(8), 1499-505
CHEMICAL ABSTRACTS, vol. 105, 1986, page 449, résumé no. 85696r, Columbus, Ohio, US; H. KOSHIMA: "Adsorption of iron(III), gold(III), gallium(III), thallium(III) and antimony(V) on Amberlite XAD and Chelex 100 resins from hydrochloric acid solution", & ANAL. SCI. 1986, 2(3), 255-60
CHEMICAL ABSTRACTS, vol. 101, no. 10 septembre 1984, page 146, résumé no. 75271b, Columbus, Ohio, US; & JP-A-59 54 626 (SUMITOMO CHEMICAL CO., LTD) 29-03-1984

(73) Titulaire : **ALUMINIUM PECHINEY**
**Immeuble Balzac 10, place des Vosges La Défense 5**
**F-92400 Courbevoie (FR)**

(72) Inventeur : **Lamerant, Jean-Michel**
**Rue de Versailles**
**F-13320 Bouc Bel Air (FR)**

(74) Mandataire : **Vanlaer, Marcel et al**
**PECHINEY 28, rue de Bonnel**
**F-69433 Lyon Cédex 3 (FR)**

(56) Documents cités :

CHEMICAL ABSTRACTS, vol. 105, 1986, page 365, résumé no. 214645z, Columbus, Ohio, US; D. BAUER et al.: "Interfacial properties of 5-alkyl 8-quinolinols and rate of phase transfer in aluminum/gallium separation", & CHEM. SEP., DEV. SEL. PAP. INT. CONF. SEP. SCI. TECHNOL., 1st 1986, 1, 303-11

CHEMICAL ABSTRACTS, vol. 104, 1986, page 262, résumé no. 153171x, Columbus, Ohio, US; M.T. SUZUKI et al.: "The separation and concentration of gallium(III) and/or indium(III) using polystyrene resins functionalized with complexane-type ligands", & BULL. CHEM. SOC. JPN. 1986, 59(3), 865-8

CHEMICAL ABSTRACTS, vol. 99, 1983, page 209, résumé no. 25952u, Columbus, Ohio, US; & JP-A-58 58 186 (AGENCY OF INDUSTRIAL SCIENCES AND TECHNOLOGY) 06-04-1983

CHEMICAL ABSTRACTS, vol. 104, no. 26, juin 1986, page 133, résumé no. 227158x, Columbus, Ohio, US; && JP-A-61 14 133 (MITSUI ALUMINIUM CO., LTD) 22-01-1986

PATENT ABSTRACTS OF JAPAN, vol. 7, no. 195 (C-183)[1340], 25 août 1983; & JP-A-58 96 831 (SUMITOMO KAGAKU KOGYO K.K.) 09-06-1983

PATENT ABSTRACTS OF JAPAN, vol. 10, no. 296 (C-377)[2352], 8 octobre 1986; & JP-A-61 111 917 (SUMITOMO CHEM. CO. LTD) 30-05-1986

PATENT ABSTRACTS OF JAPAN, vol. 9, no. 78 (C-274)[1801], 6 avril 1985; & JP-A-59 213 622 (SHIYOUWA KEIKINZOKU K.K.) 03-12-1984

PATENT ABSTRACTS OF JAPAN, vol. 9, no. 74 (C-273)[1797], 3 avril 1985; & JP-A-59 208 031 (DOUWA KOGYO K.K.) 26-11-1984

PATENT ABSTRACTS OF JAPAN, vol. 9, no. 74 (C-273)[1797], 3 avril 1985; & JP-A-59 205 431 (DOUWA KOGYO K.K.) 21-11-1984

PATENT ABSTRACTS OF JAPAN, vol. 9, no. 21 (C-263)[1744], 29 janvier 1985; & JP-A-59 169 933 (SUMITOMO KAGAKU KOGYO K.K.) 26-09-1984

## Description

## DOMAINE TECHNIQUE

La présente invention a pour objet un procédé d'extraction et de purification du gallium contenu dans les solutions d'aluminate de sodium résultant de l'attaque sodique des bauxites selon le procédé Bayer.

Elle a plus précisément pour objet un procédé d'extraction du gallium en solution alcaline par une résine adsorbante imprégnée d'un complexant du gallium suivie d'une purification du gallium ainsi extrait conduisant à une solution acide de chlorure de gallium concentré. Cette solution permet d'obtenir directement par electrolyse du gallium métal de haute pureté.

## ETAT DE LA TECHNIQUE

Le gallium, connu pendant longtemps pour ses seules propriétés de fondre à basse température permettant la fabrication d'alliages à bas point de fusion, a bénéficié depuis quelques années d'un regain d'intérêt considérable en raison notamment du développement de l'arséniure de gallium pour l'industrie électronique, préféré par exemple au silicium comme semi-conducteur dans certaines conditions d'utilisation très spécifiques.

Actuellement le gallium provient pour une part importante des liqueurs Bayer, solutions d'aluminate de sodium résultant de l'attaque par l'hydroxyde de sodium de la bauxite selon le procédé Bayer bien connu de fabrication de trihydrate d'alumine. Malgré une teneur relativement élevée de 150 à 500 mg de gallium par litre de liqueur, il est difficile de récupérer sélectivement le gallium en présence de grandes quantités d'aluminium dont les propriétés chimiques sont très voisines et d'autres impuretés solubles en milieu très alcalin, vanadate, zincate, ferrate, molybdate ...

L'électrolyse sur cathode de mercure a été le seul procédé utilisé lorsque les quantités de gallium à extraire étaient peu importantes, mais avec l'accroissement des besoins, les problèmes posés par la manipulation de grandes quantités de mercure, les faibles rendements Faraday et surtout la pureté insuffisante du produit obtenu, l'homme de métier s'est rapidement orienté vers des procédés où les étapes d'extraction du gallium dissous et de réduction à l'état de métal par cémentation ou électrolyse étaient bien distinctes et souvent séparées par des opérations intermédiaires et complémentaires de purification et de concentration.

L'amélioration qualitative du produit s'est traduite en contrepartie par un alourdissement des procédés devenus plus complexes et en fait, par un accroissement des sources de perte de matière et par des conditions de mise en oeuvre et d'exploitation de plus en plus onéreuses.

Néanmoins, des résultats intéressants ont été obtenus dans l'étape initiale de récupération du gallium dans les solutions alcalines d'aluminate de sodium avec les procédés d'extraction liquide/liquide utilisant l'hydroxy-8-quinoléine ou oxine et surtout les hydroxy-8-quinoléines substituées en 7, selon US 3 637 711, complexant du gallium permettant l'emploi de solvants non chlorés.

Parallèlement, le problème de l'amélioration de la cinétique de l'extraction liquide/liquide du gallium a été étudié par la société RHONE-POULENC. Ainsi, des progrès significatifs ont été réalisés en augmentant les surfaces d'échange entre l'agent d'extraction alcényl7 hydroxy-8 quinoléine et la solution alcaline contenant le gallium par formation de microémulsion (EP 0102280 et EP 0102882).

En raison toutefois des volumes considérables d'agent d'extraction et de solvant à mettre en jeu puis à régénérer afin d'extraire industriellement le gallium contenu dans la liqueur Bayer, plusieurs études ont été engagées pour extraire le gallium sur résines échangeuses d'ions. Ainsi, US 4 468 374 a proposé l'extraction par une résine présentant comme groupement actif la fonction amide-oxime. Bien qu'apparemment plus séduisant que l'extraction liquide/liquide, ce procédé s'est avéré très difficile à mettre en oeuvre en raison de la fragilité des groupements amide-oxime et par suite de la dégradation de la résine au cours des cycles successifs d'élution en milieu acide du gallium fixé sur la résine.

De son côté, la société MITSUBISHI CHEMICAL INDUSTRY dans son brevet japonais publié sous le n° 85-095264 a proposé d'imprégner des résines adsorbantes à base de polymères macroporeux avec des complexants du groupe Alcényl-7 hydroxy 8 quinoléine, démontrant qu'il était possible de fixer de petites quantités de gallium en solution sur la phase stationnaire ainsi constituée, puis d'éluer le gallium avec les acides minéraux classiques. Ce brevet toutefois reste silencieux sur les capacités de ces résines plus précisément sur les charges de gallium que l'on peut espérer fixer. Par ailleurs, tous les essais d'extraction décrits ont été réalisés à partir de solution d'aluminate de sodium très diluée excluant toute application directe du procédé aux liqueurs industrielles Bayer.

Tout récemment, dans une communication faite à l'I.S.E.C. à Munich en Septembre 1986, Cote et Bauer ont étudié sur différentes résines adsorbantes vendues sous le nom générique d'Amberlite XAD et imprégnées d'Alkyl 7 hydroxy-8 quinoléine vendue sous la dénomination commerciale de "Kelex 100", l'influence de différents paramètres tels que la quantité d'agent d'extraction ou complexant fixé sur la résine, les concentrations en gallium, aluminium et hydroxyde de sodium, la nature chimique de la résine adsorbante ainsi que l'effet d'additifs propres à activer la cinétique. Il en ressort que des capacités de fixation supérieures à 3 grammes de gallium par litre de résine ont été obtenues avec le résine Amberlite XAD7 à squelette ester acrylique et de caractère semi-polaire mais avec des solutions d'aluminate de sodium dont la concentration en gallium était au moins 5 fois supérieure à celle des liqueurs industrielles, excluant ainsi toute possibilité d'application du procédé à ces liqueurs dont la concentration ne peut en aucun cas être modifiée.

Enfin, un inconvénient d'ordre pratique inhérent à la plupart des procédés industriels faisant appel aux résines adsorbantes poreuses, est la préparation de la résine au cours de laquelle il est procédé à l'hydratation et au dégazage sous vide de la résine. Cette opération devient très délicate à réaliser dès l'instant qu'il faut traiter plusieurs centaines de litres de résine.

Dans ces conditions, pour l'homme de métier les seuls procédés industriels de récupération et de purification du gallium directement à partir des solutions alcalines d'aluminate de sodium sont les procédés d'extraction liquide/liquide utilisant comme extractant les hydroxy 8-quinoléines substituées en 7 avec leurs inconvénients connus de l'investissement et du coût d'exploitation élevés résultant des volumes considérables de réactifs et notamment d'extractant et de solvant à mettre en jeu, mais aussi des pertes de réactifs par dégradation et des pertes de gallium par entraînement.

## OBJET DE L'INVENTION

La présente invention concerne l'extraction du gallium directement à partir des solutions industrielles d'aluminate de sodium par fixation de gallium sur une phase stationnaire consitituée par une résine imprégnée avec restitution sans perte de gallium lors de son élution en milieu acide.

La présente invention concerne également la concentration et la purification du gallium en solution acide ainsi récupéré en vue de sa réduction directe en gallium métal de pureté 4N par électrolyse.

Plus précisément, le procédé selon l'invention est un procédé d'extraction et de purification du gallium contenu dans une solution industrielle d'aluminate de sodium par fixation du gallium sur une phase stationnaire constituée par une résine adsorbante poreuse imprégnée par un agent extractant, puis élution du gallium en milieu acide pour former un sel de gallium en solution qui après purification et concentration est réduit à l'état de gallium métal, caractérisé par les étapes suivantes :

A) Imprégnation de la résine adsorbante poreuse en présence d'un solvant volatil par une alkyl-7-hydroxy-8-quinoléine comme agent extractant éventuellement additionné d'un agent tensioactif.

B) Fixation du gallium, après évaporation du solvant et hydratation de la résine, par passage sur ladite résine d'une solution d'aluminate de sodium prélevée directement dans le cycle Bayer et maintenue à une température comprise entre 30°C et 60°C.

C) Elution du gallium, après lavage à l'eau de la résine, par un acide minéral fort et de préférence l'acide sulfurique dont la concentration est réglée entre 0,7 N et 7 N.

D) Premières purification et concentration du gallium en solution par précipitation en milieu réducteur à l'état d'hydroxyde de gallium et redissolution chlorhydrique du précipité ; cette précipitation étant de préférence précédée par une préneutralisation de l'acide sulfurique sous forme de sulfate de calcium.

E) Deuxièmes purification et concentration du gallium en solution à l'état de chlorure par extraction au moyen d'une solution organique à base de tributylphosphate jusqu'à saturation en gallium, lavage éventuel par une phase aqueuse elle-même chargée en gallium, enfin élution à l'eau d'une solution de chlorure de gallium concentré et purifié.

F) Electrolyse de la solution de chlorure de gallium concentrée et purifiée en vue de l'obtention de gallium métal de pureté 4N.

Lors des recherches sur l'extraction du gallium sur résine poreuse en milieu fortement alcalin, d'excellents résultats au niveau des capacités de fixation du gallium sur résine ont été enregistrés avec des résines poreuses non polaires à noyau aromatique polystyrénique commercialisées sous le nom de XAD 1180 par la firme DUOLITE INTERNATIONAL. Il est apparu contrairement à l'idée reçue que ce type de résine, imprégnée dans des conditions bien déterminées, pouvait fixer en quelques heures de contact malgré son caractère non polaire et hydrophobe, au moins 3 grammes de gallium par litre de résine sans dégradation de la phase stationnaire échangeuse d'ions et cela directement à partir de la solution d'aluminate de sodium prélevée dans le cycle Bayer après l'étape dite de décomposition où une partie de l'alumine en solution est précipitée. On effectue l'imprégnation de la résine microporeuse XAD 1180 par mélange avec une solution constituée de l'agent extractant qui est une alkyl-7-hydroxy 8-quinoléine commercialisé sous le nom de Kelex 100, d'éthanol comme solvant et de l'agent tensioactif qui est un chlorure d'ammonium quaternaire répondant à la formule $R_3CH_3NCl$ où R comporte entre 8 et 10 atomes de carbone. Cet agent tensioactif est commercialisé sous le nom d'ADOGEN 464 par SHEREX CHEMICAL C°. L'intérêt de cet agent mouillant est important sur le plan économique car en fin d'imprégnation par l'agent extractant Kelex 100, la résine, après séchage pour élimination du solvant, est hydratée en milieu aqueux. Elle peut être alors utilisée directement sans qu'il soit nécessaire d'effectuer de dégazage sous vide comme c'est d'ordinaire le cas.

La quantité d'extractant est déterminée en fonction du volume de résine à imprégner et doit être compris de préférence entre 150 g et 400 g de KELEX 100 par litre de résine XAD 1180 sèche.

Par rapport au poids de Kelex 100 ainsi déterminé, on adapte la quantité d'agent tensio-actif ADOGEN 464 qui doit être compris de préférence entre 5% et 15% en poids. La proportion de Kelex dans l'éthanol n'est pas critique et elle est ajustée pour que le volume de solution soit suffisant pour bien mouiller la résine.

La résine hydratée et prête à l'emploi est placée en colonne et mise en contact avec la solution industrielle d'aluminate de sodium prélevée dans le cycle Bayer après l'étape dite de décomposition où une partie de l'alumine en solution précipite. La solution d'aluminate de sodium maintenue à une température comprise entre 30°C et 60°C, mais de préférence aux environs de 50°C, est pompée dans la colonne de résine a un débit horaire de 2 à 10 fois le volume apparent de résine contenu dans la colonne, c'est-à-dire de 2 à 10 BV/heure.

La teneur en gallium dans les solutions industrielles d'aluminate de sodium est généralement comprise entre 150 mg/litre et 500 mg/litre alors que la concentration en hydroxyde de sodium exprimée en $Na_2O$ varie entre 100 g/litre et 220 g/litre et que la concentration en $Al_2O_3$ varie entre 50 g/litre et 130 g/litre.

La durée de pompage de la solution à travers le lit de résine est de l'ordre de 4 à 12 heures pour des solutions contenant 200 mg à 300 mg de gallium par litre et la quantité de gallium fixe est de l'ordre de 3 à 4 g/litre de résine. La sélectivité de la séparation du gallium et de l'aluminium est élevée puisque le rapport pondéral Al/Ga, généralement compris entre 200 et 500 dans la liqueur, est abaissé entre 0,5 et 2 dans la résine ayant fixé le gallium.

Avant élution la résine est lavée par 1 à 3 fois son volume d'eau. L'eau de lavage chargée en aluminate et hydroxyde de sodium libre est recyclée dans le circuit Bayer. L'élution est réalisée en 2 fois par une solution d'acide fort, à 50°C environ, de préférence par une solution sulfurique de concentration d'abord comprise entre 0,7N et 1,2N afin d'éliminer la majeure partie de l'aluminium fixé et ensuite comprise entre 4N et 7N pour extraire et solubiliser le gallium. Un lavage final de la résine est effectué avec 1 à 3 fois son volume d'eau dont la majeure partie est recyclée dans une étape amont comme indiqué dans l'exemple d'application.

A la solution acide d'élution contenant du gallium à des teneurs comprises entre 1 g et 20 g par litre mais également des impuretés comme de l'aluminium (Al < 1 g/litre) du Fer (Fe < 100 mg/l) du zinc (Zn < 10 mg/l) du sodium (Na < 60 mg/l) peuvent être additionnées en toute proportion, à ce stade, des solutions acides impures d'origine externe ayant des concentrations similaires en gallium et provenant d'autres procédés de récupération du gallium telles que les solutions acides d'extraction du gallium par voie liquide/liquide des liqueurs alcalines en contenant et les solutions acides d'attaque de déchets gallifères à base d'arséniure de Gallium.

La solution acide de gallium résultante, dans la mesure où elle contient de l'acide sulfurique libre, est préneutralisée par du lait de chaux ou de carbonate de chaux jusque vers pH = 2 et à une température d'environ 60°C de manière à précipiter les ions $SO_4^-$ à l'état de sulfate de calcium qui est éliminé par exemple par filtration.

Cette préneutralisation par le lait de chaux ou de carbonate de chaux moins coûteux que l'hydroxyde de sodium permet d'entraîner certaines matières organiques résiduelles, généralement à l'état de trace, qui se fixent sur les particules solides du précipité.

La solution de gallium exempte d'acide sulfurique libre est alors mélangée avec les solutions acides recyclées partiellement épuisées en gallium à l'état de chlorure provenant des étapes de purification-concentration et d'électrolyse en aval. La solution acide de gallium résultante est alors neutralisée par l'hydroxyde de sodium jusque vers pH = 4 en présence d'un réducteur, le thiosulfate de sodium, pour précipiter l'hydroxyde de Gallium Ga $(OH)_3$, alors que les principales impuretés métalliques à l'état bivalent comme le Fer et le zinc restent en solution. Après filtration et lavage, le gâteau d'hydroxyde de gallium est redissous par HCl concentré à l'état de $GaCl_3$.

Il peut se former un léger insoluble composé de soufre élémentaire que l'on élimine par filtration. On constate à ce stade une épuration déjà significative du gallium en solution puisque par comparaison à la solution acide de gallium après élution de la résine, les teneurs en zinc et fer par rapport au gallium sont respectivement divisées par 97 et par 47.

Dans l'étape suivante la solution acide de chlorure de gallium est mise en contact à température ambiante avec une solution organique constituée par un mélange de tributylphosphate et d'un alcool comportant généralement entre 8 et 13 atomes de carbone, ces constituants étant dissous dans un solvant aromatique lourd.

La meilleure efficacité de cette solution organique d'extraction est obtenue par la composition pondérale centésimale suivante :

25% – TBP

10% – Isotridecanol

65% – solvant aromatique lourd commercialisé par SHELL FRANCE sous la marque déposée RESEX.

Il est déterminant pour que cette étape de concentration du gallium soit aussi une étape de purification supplémentaire, de saturer la phase organique en gallium de manière à laisser la plus forte proportion possible d'impuretés métalliques moins "complexables" comme Fe, Zn, Al, dans la phase aqueuse. La nature et la composition de la solution organique indiquée précédemment, avec l'ajustement des volumes respectifs de phase organique et de phase aqueuse tenant compte de la concentration en gallium de la solution acide de chlorure de gallium, permet de saturer en gallium la phase organique sans apparition d'une 3ème phase. Ainsi, pour une concentration en gallium d'au moins 30 g/litre dans la phase aqueuse, le rapport

volume phase organique/volume phase aqueuse = 0,8.

Au cours de cette extraction, la phase organique chargée en gallium appelée "1er extrait" est éluée à l'eau pour former d'une part une phase organique ou solution organique regénérée et réutilisable après lavage et d'autre part un "1er éluat" aqueux de pH ≤ 2 à forte concentration en gallium (100 g/litre à 130 g/litre). A ce stade, les teneurs pondérales en impuretés dans le gallium sont respectivement

Fe < 50 ppm        Zn < 1 ppm        Al < 100 ppm.

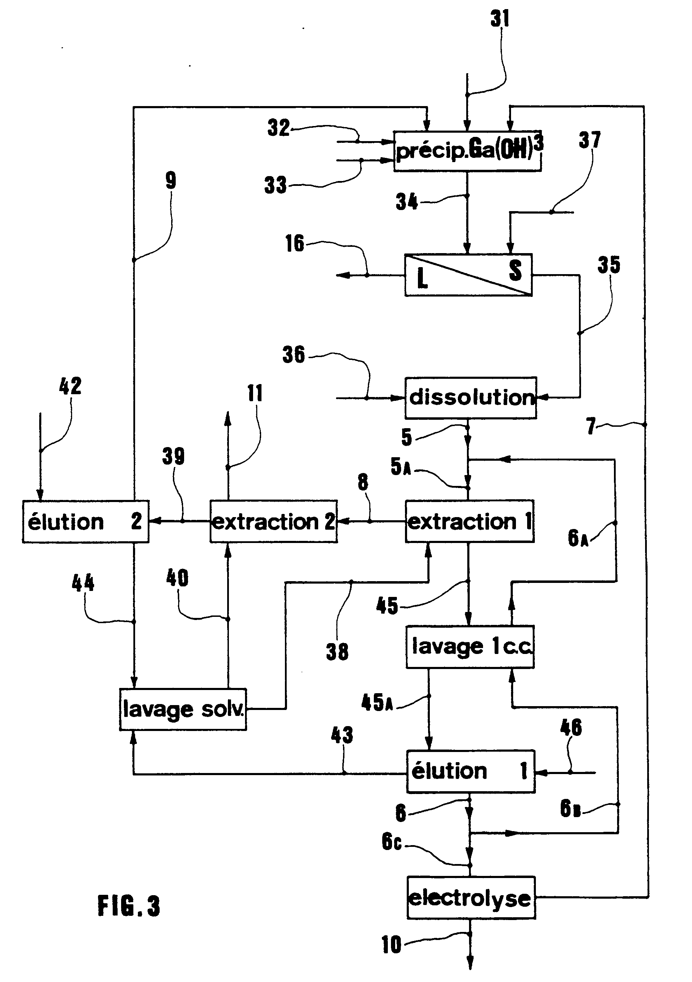

Cette purification déjà intéressante peut être encore nettement améliorée par l'adjonction d'une étape de lavage intermédiaire entre l'extraction du gallium par la phase organique à base de TBP et son élution à l'eau pure. Ce lavage de la phase organique chargée décrit plus loin en variante du procédé dans l'exemple 2 et la figure 3, s'effectue à contre-courant par une aliquote de la phase aqueuse chargée en gallium, encore appelée 1er éluat aqueux, issue de l'étape ultérieure d'élution. A chaque étape de lavage, on constate que les impuretés dont le fer ferrique se partagent nettement en faveur de la phase aqueuse alors que le gallium est peu ou pas transféré.

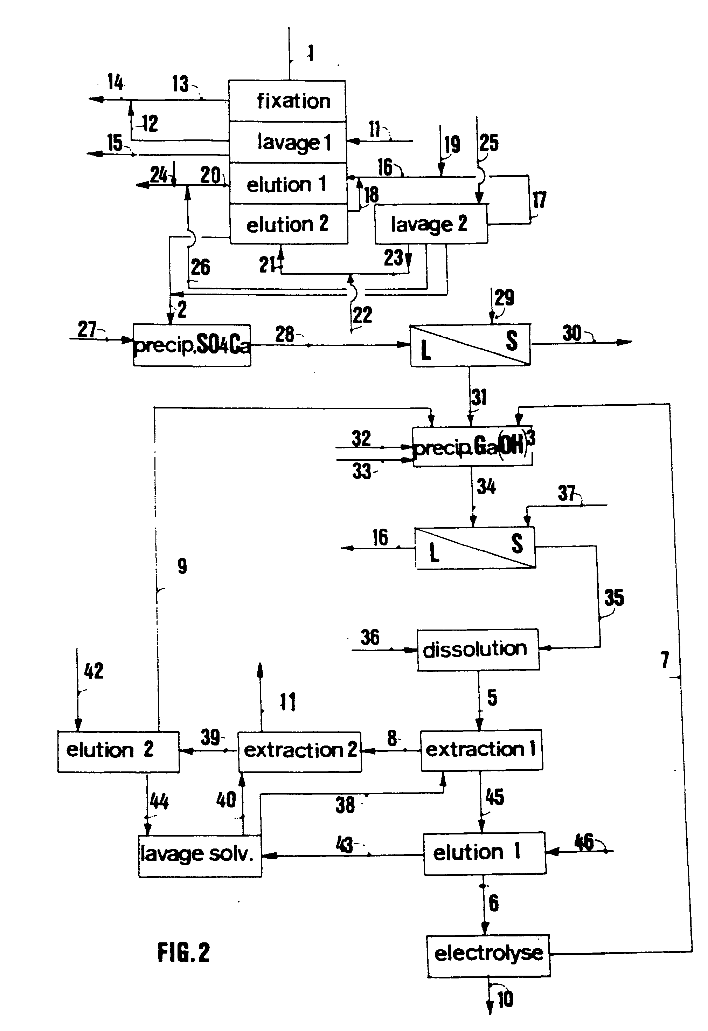

Après lavage à contre-courant l'aliquote de phase aqueuse chargée en gallium est mélangée à la solution acide de chlorure de gallium issue de l'amont, avant extraction par la solution organique. A la différence de l'extraction-élution simple sans lavage, mise en oeuvre dans l'exemple 1 figure 2, l'effet de purification est cumulatif et croît exponentiellement en fonction du nombre d'étages de lavage.

Comparé aux lavages acides pratiques classiquement en extraction liquide/liquide consommant des acides de concentrations différentes selon l'élément à laver, agissant sur peu d'éléments à la fois et engendrant des sous-produits, le procédé de lavage utilisé ici ne consomme pas de réactifs tout en ayant une action globale sur les impuretés.

Selon que l'on effectue ou non ce lavage intermédiaire à contre-courant de la solution organique avant élution à l'eau, c'est donc une fraction ou la totalité du 1er éluat aqueux de pH ≤ 2 chargé en gallium à l'état de chlorure qui est utilisé pour produire du gallium métal de pureté 4N, par électrolyse sur cathode de gallium liquide. L'électrolyte appauvri en gallium (10 g/litre à 30 g/Litre) est recyclé à l'étape de précipitation de l'hydroxyde de gallium à pH = 4.

La solution acide appauvrie en gallium après 1ère extraction par la solution organique, appelée "1er raffinat" et pouvant contenir 5 g/litre à 20 g/litre de gallium subit une 2ème extraction à température ambiante par la solution organique avec toujours ajustement des volumes respectifs de phase organique et de phase aqueuse tenant compte des teneurs en gallium du 1er raffinat. Il en résulte un 2ème raffinat totalement épuisé en gallium qui est neutralisé avant rejet et une phase organique chargée en gallium ou "2ème extrait", qui est éluée à l'eau. On obtient une phase organique regénérée qui est réutilisée après lavage et un "2ème éluat" acide aqueux contenant environ 30 grammes par litre de gallium.

Ce "2ème éluat" est recyclé comme l'électrolyte appauvri à l'étape de précipitation de l'hydroxyde de gallium vers pH = 4.

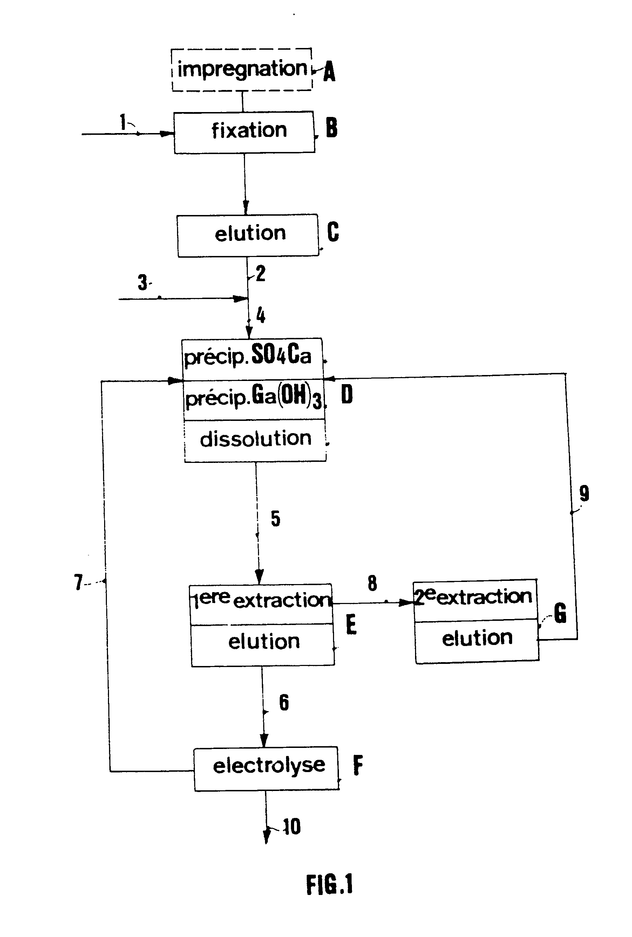

Le procédé de récupération et de purification du gallium à partir de solution industrielle d'aluminate de sodium peut donc se résumer par la succession des opérations schématisées sur la figure 1.

A) Préparation et imprégnation de la résine XAD 1180 par Kelex 100 en mélange avec un solvant et un agent tensio-actif.

B) Mise en contact avec la liqueur alcaline industrielle 1 et fixation du gallium.

C) Double élution par une acide fort du gallium sur la résine qui passe en solution acide 2 pour être éventuellement mélangé à d'autres solutions acides externes 3 pour donner la solution résultante 4.

D) 1ère purification et concentration par :

a) préneutralisation éventuelle des solutions sulfuriques 4 et mélange avec les solutions appauvries en gallium recyclées 7 et 9.

b) précipitation Ga $(OH)_3$ vers pH = 4.

c) dissolution HCl du précipité donnant liqueur 5.

E) 2ème purification et concentration par :

a) 1ère extraction de liqueur 5 par saturation en gallium d'une solution organique à base TBP donnant un 1er extrait, éventuellement lavé, et un 1er raffinat 8.

b) 1ère élution à l'eau du 1er extrait donnant le 1er éluat 6 chargé en gallium pour électrolyse.

F) Electrolyse de l'éluat 6 avec recyclage à l'étape D) de l'électrolyte appauvri 7 et production de Gallium pureté 4N en 10.

G) Récupération du 1er raffinat 8 appauvri en gallium avec :

a) 2ème extraction de 8 par solution organique à base TBP donnant un 2° extrait et un 2° raffinat épuisé en gallium

b) 2ème élution à l'eau du 2° extrait donnant l'éluat 9 contenant du gallium et recyclage à l'étape D).

Toutefois, la mise en oeuvre du procédé selon l'invention ainsi que les avantages qui en découlent seront mieux compris par la description des expérimentations ci-après s'appuyant sur les schémas détaillés du procédé selon la figure 2 et pour la variante comportant le lavage à contre-courant de la phase organique chargée en Ga par une aliquote de l'éluat aqueux selon la figure 3.

## EXEMPLE I

Indépendamment des avantages économiques connus qui résultent de l'utilisation industrielle, lorsque cela est possible, des procédés d'extraction et de purification par résine, de coûts d'investissement et d'exploitation très modérés, cet exemple d'application vise à démontrer en outre que dans le procédé selon l'invention les différents flux de produit et de réactifs sont contrôlés et recyclés pour la plupart, ce qui limite les consommations de réactif et les pertes de matière, contribuant encore à abaisser les coûts d'exploitation.

La description de l'expérimentation utilise des références numérotées pour les flux de matière.

Le procédé étant cyclique, certains flux sont recyclés d'une expérimentation précédente et sont notés a, tandis que les mêmes flux obtenus dans l'exemple décrit sont notés b. L'identité ou la proximité des valeurs pour les flux a et b est obtenue lorsque les cycles se reproduisent selon un régime stationnaire. Vingt cinq litres de résine adsorbante XAD 180 ont été mélangés et agités pendant 15 min avec 20 litres d'une solution ayant la composition pondérale suivante : KELEX 100 : 6,25 kg ; ADOGEN 464 (chlorure d'ammonium quaternaire): 0,62 kg ; éthanol à 95% en quantité suffisante pour 20 litres. La résine ainsi humectée est alors séchée doucement sous agitation manuelle à la chaleur d'un bain de sable, à environ 70°C. La résine sèche chargée en Kelex 100 et Adogen 464 est mise en contact avec de l'eau distillée. On constate que les grains s'hydratent facilement et coulent. Il suffit donc d'une faible quantité d'Adogen 464, ici 10% de la masse de Kelex 100, pour assurer une parfaite mouillabilité des grains de résine. La résine ainsi hydratée est disposée dans une colonne et occupe un volume de 28 litres sur une hauteur de 1 m ; elle est maintenue en place par deux grilles en toile polyester. Mille litres de liqueur 1 décomposée du cycle Bayer, maintenus à la température de 50°C, sont alors pompés à travers la résine pendant une durée de 6 heures, à un débit de 167 l/h environ. Ce même débit sera conservé pour toutes les liqueurs devant traverser la résine. L'analyse de la liqueur décomposée 1 est la suivante : $Na_2O$ total = 190 g/l ; $Al_2O_3$ = 109 g/l ; Ga = 0,2383 g/l. A la sortie de la colonne, on dose la liqueur moyenne 13 d'un volume de 1000 litres et l'on trouve : $Na_2O$ total = 186 g/l ; $Al_2O_3$ = 106 g/l ; Ga = 0,156 g/l.

A partir des 1000 litres de solution, 82,30 grammes de gallium ont été fixés correspondant à 34,5% du gallium contenu dans la liqueur. D'autre part, le pourcentage pondéral $Ga/Al_2O_3$ de 0,218% dans la liqueur est tombé après fixation à 0,147%.

Soixante litres d'eau de lavage 11 sont alors passés dans la colonne. On recueille une première fraction de 30 litres 12 à 102 g/l de $Na_2O$ total, destinée à être envoyée dans le cycle Bayer 14 conjointement avec les 1000 litres 13 précédemment recueillis. Une deuxième fraction de 30 litres 15 ne contenant plus que 9 g/l de $Na_2O$ est récupérable au circuit Bayer, dans un étage de lavage approprié. Une première élution de la résine est ensuite réalisée avec 45 l d'une liqueur 16 maintenue à 50°C et contenant 45,22 g/l de $H_2SO_4$ total ; 0,133 g/l de Al ; 43 g/l de $H_2SO_4$ libre. Cette liqueur est constituée du mélange de 30 l de liqueur 17a contenant 12,67 g/l de $H_2SO_4$ ; de 15 l de liqueur 18a contenant 26,67 g/l de $H_2SO_4$ total, 20 g/l de $H_2SO_4$ libre et 0,4 g d'Al ; et de 1364 g d'acide sulfurique à 92%, 19.

A la sortie de la colonne on recueille 45 l d'une liqueur 20 contenant en moyenne $H_2SO_4$ total = 35,55 g/l; $H_2SO_4$ libre = 24 g/l ; Al = 1,69 g/l ; $Na_2O$ = 0,09 g/l ; Ga = traces.

Une deuxième élution de la résine est réalisée avec 30 l d'une liqueur 21 maintenue à 50°C contenant $H_2SO_4$ total = 250 g/l, $H_2SO_4$ libre = 248,7 g/l ; Ga = 0,467 g/l et provenant du mélange de 6,2 kg d'$H_2SO_4$ à 92% 22 et de 27 litres de solution 23a contenant : $H_2SO_4$ total = 66,55 g/l ; $H_2SO_4$ libre = 65,2 g/l ; Ga = 0,519 g/l. Les 15 premiers litres sortant de la colonne constituent la liqueur 18b. La liqueur moyenne 2 recueillie ensuite, est le mélange des 15 litres déplacés par la fin de l'élution, avec les 15 premiers litres déplacés par le début du lavage final décrit plus bas, et contient : $H_2SO_4$ total = 175,3 g/l ; $H_2SO_4$ libre = 167,7 g/l ; Ga = 2,743 g/l ; Al = 0,28 g/l ; Fe = 50 mg/l ; Zn = 3,1 mg/l ; Na = 39 mg/l.

A ce stade, la quantité de gallium éluée est donc de 82,29 grammes et la perte en gallium par rapport au gallium fixé est seulement de 0,1 gramme.

7

Le lavage final de la résine est effectué à l'aide de 87 litres d'eau 25 à 50°C. Après la collecte des 15 premiers litres mentionnés cidessus, une deuxième fraction de 27 litres constitue la liqueur 23b devant être recyclée.

La troisième fraction recueillie à la sortie de la colonne a un volume de 30 litres et constitue la liqueur 17 recyclée. La quatrième et dernière fraction 26 a un volume de 15 litres et contient : $H_2SO_4$ = 4,67 g/l. Cette liqueur est rejetée conjointement à la liqueur 20 issue de l'élution n° 1, après neutralisation au calcaire 24.

La liqueur sulfurique 2 destinée à la production du gallium est portée à 60°C dans un réacteur agité. Du lait de chaux 27 est introduit lentement et en continu dans le réacteur jusqu'à ce que le mélange atteigne pH 2. La suspension 28 obtenue est filtrée sous vide et le gâteau est lavé par 50 litres d'eau chaude 29. Le solide essoré 30, constitué de sulfate de calcium, pèse 39,1 Kg et contient 7,7 ppm de Ga. Les filtrats sont réunis et constituent une liqueur 31 d'un volume de 83,5 litres, contenant : Ga = 0,982 g/l ; $H_2SO_4$ total = 4,44 g/l ; $H_2SO_4$ libre = 0,63 g/l ; Fe = 53 mg/l ; Al = 0,1 g/l ; Zn = 1,7 mg/l.

A ce stade, la quantité de gallium est donc de 81,99 grammes, ce qui traduit une perte de 0,30 gramme par rapport au gallium contenu dans la solution acide d'élution, perte qui correspond au gallium entraîné dans le précipité de sulfate de calcium.

Cette liqueur 31 est chauffée ensuite à 60°C dans un réacteur agité, conjointement à une liqueur 7a recyclée, de volume 1 l, titrant : Ga = 18 g/l ; HCl total = 33 g/l, ainsi qu'à une autre liqueur recyclée 9a de volume 0,6 l et titrant : Ga = 50 g/l ; HCl total = 92 g/l. A ce mélange on ajoute 1086 g de solution de soude 32 à 20,8% et 2 l d'une solution aqueuse 33 à 50 g/l de $Na_2S_2O_3$, 5 $H_2O$ ; l'addition de soude correspond à l'obtention de pH 4.

Le précipité 34 ainsi obtenu, composé essentiellement d'hydroxydes de gallium et d'aluminium, est filtré sous vide et lavé par 7 litres d'eau pure 37. Le filtrat 16 est rejeté alors que le gâteau 35 de masse 1,6 kg est alors dissous par 3,215 kg d'acide chlorhydrique 36 à 32%. La solution chlorhydrique filtrée 5 a un volume de 4,33 litres et titre : Ga = 30 g/l ; HCl total = 237,4 g/l ; HCl libre = 182 g/l ; Fe = 115 mg/l ; Zn = 0,35 mg/l ; Al = 1,9 g/l. On constate que le fer et le zinc ont été épurés dans des proportions importantes par rapport à la liqueur 2 : ceci est dû aux conditions de précipitation de $Ga(OH)_3$ vers pH 4 et en milieu réducteur de thiosulfate, car les métaux de valence 2 ne précipitent pas avant pH 6 dans ces conditions. Une solution organique 38a comportant en masses : Tributylphosphate = 25% ; iso-tridécanol = 10% ; RESEX (solvant aromatique lourd) = 65%, est alors utilisée pour extraire en continu la liqueur précédente 5, à l'aide d'une batterie de 3 mélangeurs/décanteurs fonctionnant à contrecourant. Le rapport des phases est ajusté pour que les 4,33 litres de phase aqueuse correspondent à 3,25 l de phase organique. Cette opération d'extraction ainsi que celles qui vont suivre, sont réalisées à la température ambiante. Le raffinat 8 obtenu, de volume 4 litres titre : Ga = 7,57 g/l. L'extrait correspondant 45 de volume 3,5 litres titre : Ga = 28,5 g/l, ce qui correspond à une valeur proche de la saturation de la phase organique. Cet extrait est élué à l'eau 46 à raison de 0,82 l d'eau pour 3,5 l, grâce à 4 étages de mélangeurs/décanteurs à contrecourant. L'éluat aqueux 6 de pH ≤ 2 et de volume 0,835 l, titre Ga = 119 g/l ; HCl total = 215 g/l ; Fe = 4 mg/l ; Zn < 0,1 mg/l ; Al < 1 mg/l. On constate donc que le fer et le zinc ont subi une nouvelle épuration grâce aux conditions particulières de l'extraction ; ces deux éléments auraient été complètement extraits avec le gallium si le tributylphosphate n'avait été utilisé dans les conditions décrites cidessus.

C'est cette liqueur 6 qui est utilisée pour produire 81,4 g de gallium métallique 10 de pureté 4N par électrolyse sur cathode de Ga liquide, après passage d'un courant de 20 A pendant 10h30. L'électrolyte partiellement épuisé constitue la liqueur 7b à recycler à la précipitation des hydroxydes. D'autre part, la liqueur aqueuse ou raffinat 8 obtenu plus haut, contenant encore du gallium, subit une extraction en 2 étages à contre-courant, à l'aide de 1,6 litres de phase organique 40a de même composition que 38a pour 4 l de liqueur 8. Le raffinat 11 épuisé en gallium et contenant tout l'aluminium, constitue un effluent à neutraliser avant rejet. L'extrait correspondant 39 est alors élué à l'eau 42 en 2 étages à contre-courant, avec un rapport de phases de 0,6 litre d'eau pour 1,6 litre de phase organique ou extrait 39. L'éluat aqueux constitue la solution 9b à recycler. Cette élution ainsi que la précédente ayant donné des phases organiques 43 et 44 régénérées, ces dernières sont mélangées pour subir un lavage par une solution de $Na_2CO_2$ à 5%, puis de HCl à 10% environ, avant d'être à nouveau réparties vers les deux extractions décrites plus haut par les flux 38 et 40.

Si l'on considère dans le bilan matière final que les flux recyclés 7 et 9 sont de composition identique en régime stationnaire d'une opération (a) à l'autre (b), la quantité de gallium mise en jeu avant l'étape de la précipitation de $Ga(OH)_3$ est donc de 81,99 + 30 + 18 = 129,99 grammes, alors qu'au terme des étapes successives de précipitation, dissolution acide, extraction au TBP, élution et enfin électrolyse, la quantité de gallium obtenue est de 81,4 + 30 + 18 = 129,40 grammes soit une perte de 0,59 gramme.

Le total des pertes par rapport aux 82,30 grammes de fixer à l'origine sur la résine imprégnée est donc de 0,01 + 0,30 + 0,59 = 0,90 gramme et le rendement matière global du gallium depuis l'étape d'extraction jusqu'à l'étape finale de gallium metal de pureté 4N est donc de :
100 /(82,30 − 0,90)/82,30/ = 98,90%.

## EXEMPLE 2

Cet exemple décrit la variante lavage à contre-courant, avant élution à l'eau, de la phase organique à base TBP saturée en gallium. Cette variante permettant une épuration plus poussée des solutions de chlorure de gallium destinées à l'électrolyse est particulièrement intéressante à mettre en oeuvre pour le traitement de solutions mixtes de gallium provenant des étapes amont constituées par le mélange de la liqueur industrielle 2, fig.2, du procédé BAYER avec une forte proportion de liqueurs d'origine externe 27 fig.2, comme les solutions chlorhydriques de déchets de gallium à base d'arséniure de gallium. Ces solutions introduisent des impuretés spécifiques comme As, ou accidentelles comme Cu, qui se rajoutent aux impuretés de base que sont Fe, Zn, Al, Na.

Selon fig.3 une solution mixte de cette origine après ajout des solutions de chlorure de gallium 7 et 9 recyclées de l'amont forme une liqueur 5 dont la concentration en gallium est de 40,9 g/litre et dont les concentrations en impuretés sont indiquées dans le tableau 1 ci-dessous.

### TABLEAU I

| Impuretés | Fe | Na | Ca | Ti | As | H3PO4 | Al | Zn | Cu |
|---|---|---|---|---|---|---|---|---|---|
| g/l | 0,146 | 0,46 | 0,07 | 0,042 | 0,113 | 0,13 | 3,6 | 0,002 | 0,0019 |

Cette liqueur 5 est mélangée au flux 6a qui remonte du lavage 1 de la solution organique 45 chargée en gallium pour former la liqueur 5A dont la concentration en gallium est de 51,1 g/litre avec comme principales impuretés Fe : 0,133 g/l, Na 0,41 g/l et Al 3,2 g/l.

Cette liqueur 5A alimente en continu une 1ère batterie de mélangeurs décanteurs comportant une zone de 4 étages d'extraction, une zone de 4 étages de lavage et une zone de 5 étages d'élution où elle est mise en contact avec une solution organique 38 régénérée, et cela dans un rapport du volume de solution organique au volume de solution de chlorure de gallium de l'ordre de 0,8. Le raffinat 8 sortant de la zone d'extraction, volontairement non épuisé en gallium est envoyé sur une 2ème batterie d'extraction comportant une zone de 3 étages d'extraction et une zone de 2 étages de réextraction où en sortie, conformément aux figures 2 et 3 on recueille d'une part un 2° raffinat 11 cette fois épuisé en gallium et contenant une fraction importante des impuretés de la liqueur 5, d'autre part un "2ème éluat" aqueux 9 recyclé en amont. Par ailleurs, la solution organique chargée en gallium 45 ou "1er extrait" après lavage à contre-courant par une aliquote 6B de l'éluat aqueux 6, fournit la solution lavée 45A qui après élution à l'eau produit la liqueur 6c destinée à l'électrolyse après prélèvement de l'aliquote 6B.

Les teneurs en impuretés par rapport au gallium dans l'éluat aqueux 6C de concentration Ga = 110 g/l sont indiquées dans le Tableau 2 ci-dessous. A titre comparatif sont indiquées les teneurs en ppm impuretés par rapport à Ga dans la solution impure 5 de chlorure de Gallium (Tableau 1) ainsi que dans un éluat aqueux 6 issu directement de l'extraction 1 n'ayant donc pas subi de lavage intermédiaire à contre-courant comme dans l'exemple 1.

### TABLEAU II

| ppm/Ga | Fe | Na | Ca | Ti | As | P | Al | Zn | Cu |
|---|---|---|---|---|---|---|---|---|---|
| Liqueur 5 | 3570 | 11250 | 1710 | 1030 | 2760 | 1000 | 88000 | 50 | 46 |
| ELuat 6 non lavé | 90 | 30 | 100 | 30 | <20 | <10 | 20 | <2 | 1 |
| Eluat 6C | 2,7 | 18 | 90 | 9 | < 9 | <2,7 | 9 | <2 | 0,5 |

On constate une diminution significative des taux d'impuretés et plus particulièrement du Fer lorsqu'on procède à un lavage intermédiaire. Cette purification se vérifie d'ailleurs entre chaque étage de lavage prouvant que le lavage du solvant chargé en gallium n'a pas qu'un effet d'élimination des vésicules de phase aqueuse éventuellement entraînées dans la phase organique, mais qu'il s'agit bien d'un partage chimique dont l'effet croît exponentiellement avec le nombre d'étages de lavage mis en oeuvre.

**Revendications**

1. Procédé d'extraction et de purification du gallium contenu dans une solution industrielle d'aluminate de sodium par fixation du gallium sur une phase stationnaire constituée par une résine adsorbante poreuse imprégnée par un agent extractant, puis élution du gallium en milieu acide pour former un sel de gallium en solution qui après purification et concentration est réduit à l'état de gallium métal, caractérisé par les étapes suivantes:

A) Imprégnation de la résine adsorbante poreuse en présence d'un solvant volatil par une alkyl-7-hydroxy-8-quionoléine comme agent extractant éventuellement additionné d'un agent tensioactif.

B) Fixation du gallium, après évaporation du solvant et hydratation de la résine, par passage sur ladite résine d'une solution d'aluminate de sodium prélevée directement dans le cycle Bayer et maintenue à une température comprise entre 30°C et 60°C.

C) Elution du gallium après lavage à l'eau de la résine, par un acide minéral fort et de préférence l'acide sulfurique dont la concentration est réglée entre 0,7N et 7N.

D) Premières purification et concentration du gallium par précipitation en milieu réducteur à l'état d'hydroxyde de gallium et redissolution chlorhydrique sous forme de chlorure de gallium.

E) Deuxièmes purification et concentration du gallium à l'état de chlorure par extraction au moyen d'une solution organique à base de tributylphosphate et élution à l'eau.

F) Electrolyse de la solution de chlorure de gallium concentrée et purifiée en vue de l'obtention de gallium métal de pureté 4N.

2. Procédé d'extraction et de purification selon la revendication 1 caractérisé en ce que la résine adsorbante poreuse est une résine polystyrènique de caractère non polaire et hydrophobe.

3. Procédé d'extraction et de purification selon les revendications 1 et 2 caractérisé en ce que la résine adsorbante poreuse est imprégnée par l'alkyl-7-hydroxy-8-quinoléine comme agent extractant dans la proportion de 150 grammes à 400 grammes dudit agent extractant par litre de résine sèche.

4. Procédé d'extraction et de purification selon les revendications 1 à 3 caractérisé en ce que l'agent extractant est dissous dans un solvant volatil et additionné à raison de 5% à 15% de son poids d'un agent tensio-actif.

5. Procédé d'extraction et de purification selon la revendication 4 caractérisé en ce que l'agent tensio-actif est un chlorure d'ammonium quaternaire de formule $R_3CH_3NCl$ où R comporte entre 8 et 10 atomes de carbone.

6. Procédé d'extraction et de purification selon les revendications 1 à 5 caractérisé en ce que la résine adsorbante poreuse après imprégnation, séchage et hydratation, est prête à l'emploi.

7. Procédé d'extraction et de purification selon les revendications 1 à 6 caractérisé en ce que la solution d'aluminate de sodium prélevée dans le cycle Bayer après l'étape de décomposition a une concentration en gallium comprise entre 150 mg et 500 mg par litre de solution, une concentration en soude totale exprimée en $Na_2O$ comprise entre 100 g et 220 g par litre de solution, une concentration en $Al_2O_3$ dissous comprise entre 50 g et 130 g par litre de solution.

8. Procédé d'extraction et de purification selon les revendications 1 à 7 caractérisé en ce que la résine prête à l'emploi est mise en contact pendant 4 à 12 heures avec la solution d'aluminate de sodium circulant à une température voisine de 50°C de préférence et à un débit horaire de 2 à 10 fois le volume apparent de résine contactée.

9. Procédé d'extraction et de purification selon les revendications 1 à 8 caractérisé en ce qu'après lavage de la résine par 1 à 3 fois son volume d'eau, le gallium fixé sur la résine est redissous à l'issue d'une double élution à environ 50°C avec un acide fort de préférence l'acide sulfurique, à une concentration tout d'abord comprise entre 0,7N et 1,2N et ensuite à une concentration comprise entre 4N et 7N.

10. Procédé d'extraction et de purification selon les revendications 1 à 9 caractérisé en ce que la solution acide de gallium élué contient de 1 à 20 g de gallium par litre et comme principales impuretés Al, Fe, Zn et Na en solution.

11. Procédé d'extraction et de purification selon la revendication 10 caractérisé en ce qu'à ladite solution acide de gallium élué, peuvent être additionnées en toute proportion des solutions acides impures contenant également de 1 à 20 grammes de gallium et provenant d'autres procédés de récupération du gallium, telles que les solutions acides d'extraction du gallium par voie liquide/liquide des liqueurs alcalines en contenant et les solutions acides d'attaque de déchets gallifères à base d'arséniure de gallium.

12. Procédé d'extraction et de purification selon les revendications 1, 10 et 11 caractérisé en ce que les solutions acides de gallium contenant de l'acide sulfurique sont préneutralisées vers pH = 2 par du lait de chaux ou de carbonate de chaux pour précipiter à 60°C environ du sulfate de calcium qui est éliminé après filtration.

13. Procédé d'extraction et de purification selon les revendications 1, 10, 11 et 12 caractérisé en ce que les solutions acides de gallium exemptes d'acide sulfurique libre sont mélangées avec les solutions recyclées partiellement épuisées en gallium provenant des étapes de purification, concentration et d'électrolyse en aval, puis neutralisées par l'hydroxyde de sodium en présence de thiosulfate de sodium pour précipiter à 60°C environ l'hydroxyde de gallium qui est séparé par décantation et/ou filtration et redissous par HCl à l'état de chlorure de gallium.

14. Procédé d'extraction et de purification selon les revendications 1, 10 à 13 caractérisé en ce que la solution acide de chlorure de gallium est mise en contact à température ambiante avec une solution organique constituée par un mélange de tributylphosphate à raison de 25% en poids, d'un alcool entre C8 et C13 à raison de 10% en poids et d'un solvant aromatique lourd à raison de 65% en poids, et cela jusqu'à saturation en gallium de la solution organique.

15. Procédé d'extraction et de purification selon la revendication 14 caractérisé en ce que le rapport du volume de la solution organique au volume de la solution acide de chlorure de gallium est d'environ 0,8, lorsque la concentration en gallium de cette solution est d'au moins 30 g/litre.

16. Procédé d'extraction et de purification selon les revendications 1, 14 et 15 caractérisé en ce que la solution organique chargée en gallium, après mise en contact avec la solution acide de chlorure de gallium et avant élution à l'eau, est lavée à contre-courant par une aliquote de la phase aqueuse chargée en gallium issue de l'étape ultérieure d'élution.

17. Procédé d'extraction et de purification selon les revendications 1 et 14 à 16, caractérisé en ce qu'après lavage à contre-courant l'aliquote de phase aqueuse chargée en gallium est mélangée à la solution acide de chlorure de gallium issue de l'amont, avant l'étape d'extraction par la solution organique.

18. Procédé d'extraction et de purification selon les revendications 1 et 14 à 17 caractérisé en ce que la solution organique chargée en gallium après lavage à contre-courant est éluée à l'eau pour former d'une part une solution organique régénérable et réutilisable après lavage et d'autre part un éluat aqueux à forte concentration en gallium à l'état de chlorure, dont une aliquote est prélevée pour lavage à contre-courant de la solution organique chargée en gallium et la fraction restante est destinée à l'électrolyse.

19. Procédé d'extraction et de purification selon les revendications 1, 14 et 15 caractérisé en ce que la solution organique chargée en gallium, après mise en contact avec la solution acide de chlorure de gallium, est éluée directement à l'eau pour former d'une part une solution organique régénérable et un éluat aqueux à forte concentration en gallium, à l'état de chlorure, destiné à l'électrolyse.

20. Procédé d'extraction et de purification selon les revendications 1 et 14 à 19 caractérisé en ce que l'éluat aqueux à forte concentration en gallium à l'état de chlorure a un pH ≤ 2.

21. Procédé d'extraction et de purification selon les revendications 1 et 14 à 20 caractérisé en ce que l'éluat aqueux est électrolysé sur cathode de gallium liquide pour produire du gallium métal de pureté 4N et une solution d'électrolyte appauvrie en gallium qui est recyclée à l'étape D) de précipitation de l'hydroxyde de gallium.

22. Procédé d'extraction et de purification selon les revendications 1, 14 et 15 caractérisé en ce que la solution acide de chlorure de gallium appauvrie en gallium après la première extraction réalisée par la solution organique, est mise une 2ème fois en contact avec de la solution organique pour extraire le gallium résiduel qui après élution à l'eau est recyclé à l'étape D) de précipitation de l'hydroxyde de gallium.

23. Procédé d'extraction et de purification selon revendications 1 à 22 caractérisé en ce que les réactifs mis en oeuvre dans le procédé selon l'invention sont recyclés à une étape du procédé lui-même ou à une étape du cycle Bayer de fabrication d'alumine.

## Ansprüche

1. Verfahren zur Extraktion und Reinigung des in einer industriellen Natriumaluminatlösung enthaltenen Galliums durch Festlegung des Galliums auf einer stationären Phase, die aus einem porösen, mit einem Extraktionsmittel imprägnierten, adsorbierenden Harz besteht, danach Elution des Galliums in saurem Medium zur Bildung eines Galliumsalzes in Lösung, das nach Reinigung und Konzentration in den Zustand von Galliummetall reduziert wird, **gekennzeichnet** durch die folgenden Schritte :

A) Imprägnierung des porösen, adsorbierenden Harzes in Gegenwart eines flüchtigen Lösungsmittels mit einem Alkyl-7-hydroxy-8-Chinolin als Extraktionsmittel, dem gegebenenfalls ein oberflächenspannungsaktives Mittel zugesetzt ist.

B) Festlegung des Galliums, nach Verdampfung des Lösungsmittels und Hydratation des Harzes, durch Leiten einer Natriumaluminatlösung über das Harz, die direkt im Bayer-Zyklus entnommen und auf einer Temperatur zwischen 30°C und 60°C gehalten ist.

C) Elution des Galliums, nach Waschen des Harzes mit Wasser, durch eine starke Mineralsäure und vorzugsweise Schwefelsäure, deren Konzentration zwischen 0,7 N und 7 N reguliert wird.

D) Erste Reinigung und Konzentration des Galliums durch Ausfällung in reduzierendem Medium im Galliumhydroxidzustand und salzsaure Wiederauflösung in Galliumchloridform.

E) Zweite Reinigung und Konzentration des Galliums im Chloridzustand durch Extraktion mittels einer orga-

EP 0 297 998 B1

nischen Lösung auf Tributylphosphatbasis und Elution mit Wasser.

F) Elektrolyse der konzentrierten und gereinigten Galliumchloridlösung zwecks Erhaltens von Galliummetall einer Reinheit 4 N.

2. Extraktions- und Reinigungsverfahren nach dem Anspruch 1, dadurch gekennzeichnet, daß das poröse, adsorbierende Harz ein Polystyrolharz nichtpolarer und hydrophober Art ist.

3. Extraktions- und Reinigungsverfahren nach den Ansprüchen 1 und 2, dadurch gekennzeichnet, daß das poröse, adsorbierende Harz mit dem Alkyl-7-hydroxy-8-Chinolin als Extraktionsmittel im Verhältnis von 150 g zu 400 g des Extraktionsmittels je Liter trockenen Harzes imprägniert wird.

4. Extraktions- und Reinigungsverfahren nach den Ansprüchen 1 bis 3, dadurch gekennzeichnet, daß das Extraktionsmittel in einem flüchtigen Lösungsmittel gelöst und im Verhältnis von 5% bis 15% seines Gewichts mit einem oberflächenspannungsaktiven Mittel versetzt wird.

5. Extraktions- und Reinigungsverfahren nach dem Anspruch 4, dadurch gekennzeichnet, daß das oberflächenspannungsaktive Mittel ein quaternäres Ammoniumchlorid der Formel $R_3CH_3NCl$ ist, wo R zwischen 8 und 10 Kohlenstoffatome aufweist.

6. Extraktions- und Reinigungsverfahren nach den Ansprüchen 1 bis 5, dadurch gekennzeichnet, daß das poröse, adsorbierende Harz nach Imprägnierung, Trocknung und Hydratation zur Verwendung bereit ist.

7. Extraktions- und Reinigungsverfahren nach den Ansprüchen 1 bis 6, dadurch gekennzeichnet, daß die im Bayer-Zyklus nach dem Zersetzungsschritt entnommene Natriumaluminatlösung eine Konzentration an Gallium im Bereich von 150 mg bis 500 mg je Liter Lösung, eine Konzentration an Gesamtsoda, als $Na_2O$ ausgedrückt, im Bereich von 100 g bis 220 g je Liter Lösung und eine Konzentration an gelöstem $Al_2O_3$ im Bereich von 50 g bis 130 g je Liter Lösung hat.

8. Extraktions- und Reinigungsverfahren nach den Ansprüchen 1 bis 7, dadurch gekennzeichnet, daß das zur Verwendung bereite Harz während 4 bis 12 Stunden mit der Natriumaluminatlösung in Kontakt gebracht wird, die bei einer Temperatur von vorzugsweise nahe 50°C einen stündlichen Durchsatz des 2- bis 10 fachen des scheinbaren Volumens an kontaktiertem Harz hat.

9. Extraktions- und Reinigungsverfahren nach den Ansprüchen 1 bis 8, dadurch gekennzeichnet, daß nach Waschen des Harzes mit dem 1- bis 3 fachen seines Volumens an Wasser das auf dem Harz festgelegte Gallium am Ausgang einer doppelten Elution bei etwa 50°C mit einer starken Säure, vorzugsweise Schwefelsäure, mit einer Konzentration von anfangs im Bereich von 0,7 N bis 1,2 N und anschließend einer Konzentration im Bereich von 4 N bis 7 N wieder aufgelöst wird.

10. Extraktions- und Reinigungsverfahren nach den Ansprüchen 1 bis 9, dadurch gekennzeichnet, daß die saure Lösung von eluiertem Gallium 1 bis 10 g Gallium je Liter und als Hauptverunreinigungen Al, Fe, Zn und Na in Lösung enthält.

11. Extraktions- und Reinigungsverfahren nach dem Anspruch 10, dadurch gekennzeichnet, daß der sauren Lösung von eluiertem Gallium in jedem Verhältnis saure unreine Lösungen, die ebenfalls 1 bis 20 g Gallium enthalten und von anderen Galliumgewinnungsverfahren, wie z. B. die sauren Lösungen zur Extraktion des Galliums aus alkalischen, es enthaltenden Flüssigkeiten auf dem Flüssig/Flüssig-Weg und die sauren Lösungen zum Aufschluß von galliumhaltigen Abfällen auf Galliumarsenidbasis, zugesetzt werden können.

12. Extraktions- und Reinigungsverfahren nach den Ansprüchen 1, 10 und 11, dadurch gekennzeichnet, daß die Schwefelsäure enthaltenden sauren Galliumlösungen auf einen pH-Wert = 2 durch Kalkmilch oder Calciumcarbonat vorneutralisiert werden, um bei etwa 60°C Calciumsulfat auszufällen, das nach Filtrieren beseitigt wird.

13. Extraktions- und Reinigungsverfahren nach den Ansprüchen 1, 10, 11 und 12, dadurch gekennzeichnet, daß die von freier Schwefelsäure freien sauren Galliumlösungen mit den rückgeführten, teilweise an Gallium erschöpften Lösungen, die von den Reinigungs-, Konzentrations- und Elektrolyseschritten stromab stammen, vermischt und dann durch Natriumhydroxid in Gegenwart von Natriumthiosulfat neutralisiert werden, um bei etwa 60°C das Galliumhydroxid auszufällen, das durch Dekantieren und/oder Filtrieren abgetrennt und durch HCl zum Galliumchloridzustand wieder aufgelöst wird.

14. Extraktions- und Reinigungsverfahren nach den Ansprüchen 1, 10 und 13, dadurch gekennzeichnet, daß die saure Galliumchloridlösung bei Umgebungstemperatur mit einer organischen Lösung, die aus einem Gemisch von Tributylphosphat im Anteil von 25 Gew.%, eines Alkohols zwischen C 8 und C 13 im Anteil von 10 Gew.% und eines schweren aromatischen Lösungsmittels im Anteil von 65 Gew.% zusammengesetzt ist, bis zur Sättigung der organischen Lösung an Gallium in Kontakt gebracht wird.

15. Extraktions- und Reinigungsverfahren nach dem Anspruch 14, dadurch gekennzeichnet, daß das Verhältnis des Volumens der organischen Lösung zum Volumen der sauren Galliumchloridlösung etwa 0,8 ist, wenn die Konzentration dieser Lösung an Gallium wenigstens 30 g/l ist.

16. Extraktions- und Reinigungsverfahren nach den Ansprüchen 1, 14 und 15, dadurch gekennzeichnet, daß die organische, mit Gallium beladene Lösung nach Kontaktierung mit der sauren Galliumchloridlösung und vor der Elution mit Wasser im Gegenstrom mit einer Teilmenge der mit Gallium beladenen, vom späteren Elutionsschritt stammenden wässerigen Phase gewaschen wird.

17. Extraktions- und Reinigungsverfahren nach den Ansprüchen 1 und 14 bis 16, dadurch gekennzeichnet, daß nach dem Waschen im Gegenstrom die Teilmenge von mit Gallium beladener wässeriger Phase mit der von stromauf stammenden sauren Galliumchloridlösung vor dem Extraktionsschritt durch die organische Lösung vermischt wird.

18. Extraktions- und Reinigungsverfahren nach den Ansprüchen 1 und 14 bis 17, dadurch gekennzeichnet, daß die mit Gallium beladene organische Lösung nach dem Waschen im Gegenstrom mit Wasser eluiert wird, um einerseits eine organische regenerierbare und nach Waschen wiederverwendbare Lösung und andererseits ein wässeriges Eluat mit starker Konzentration an Gallium im Chloridzustand zu bilden, wovon eine Teilmenge zum Waschen der mit Gallium beladenen organischen Lösung im Gegenstrom entnommen wird und der restliche Anteil zur Elektrolyse bestimmt ist.

19. Extraktions- und Reinigungsverfahren nach den Ansprüchen 1, 14 und 15, dadurch gekennzeichnet, daß die mit Gallium beladene organische Lösung nach der Kontaktierung mit der sauren Galliumchloridlösung direkt mit Wasser eluiert wird, um einerseits eine organische regenerierbare Lösung und ein wässeriges Eluat mit starker Konzentration an Gallium im Chloridzustand zu bilden, das zur Elektrolyse bestimmt ist.

20. Extraktions- und Reinigungsverfahren nach den Ansprüchen 1 und 14 bis 19, dadurch gekennzeichnet, daß das wässerige Eluat mit starker Konzentration an Gallium im Chloridzustand einen pH-Wert ≤ 2 hat.

21. Extraktions- und Reinigungsverfahren nach den Ansprüchen 1 und 14 bis 20, dadurch gekennzeichnet, daß das wässerige Eluat an einer Kathode aus flüssigem Gallium elektrolysiert wird, um Galliummetall einer Reinheit 4 N und eine an Gallium verarmte Elektrolytlösung zu erzeugen, die zum Schritt D) der Ausfällung des Galliumhydroxids rückgeführt wird.

22. Extraktions- und Reinigungsverfahren nach den Ansprüchen 1, 14 und 15, dadurch gekennzeichnet, daß die saure Galliumchloridlösung, die nach der ersten durch die organische Lösung vorgenommenen Extraktion an Gallium verarmt ist, ein zweites Mal mit der organischen Lösung in Kontakt gebracht wird, um das restliche Gallium zu extrahieren, das nach Elution mit Wasser zum Schritt. D) zur Ausfällung des Galliumhydroxids rückgeführt wird.

23. Extraktions- und Reinigungsverfahren nach den Ansprüchen 1 bis 22, dadurch gekennzeichnet, daß die beim Verfahren gemäß der Erfindung eingesetzten Reagenzien zu einem Schritt des Verfahrens selbst oder zu einem Schritt des Bayer-Zyklus zur Aluminiumoxidherstellung rückgeführt werden.

## Claims

1. A process for extracting and purifying the gallium contained in an industrial solution of sodium aluminate by fixing the gallium on a stationary phase constituted by a porous adsorbent resin impregnated with an extracting agent, then eluting the gallium in an acid medium in order to form a gallium salt in solution which, after purification and concentration, is reduced to the state of metallic gallium, characterised by the following stages:

A) Impregnation of the porous adsorbent resin in the presence of a volatile solvent using a 7-alkyl 8-hydroxyquinoline as extracting agent, to which a surface-active agent has optionally been added.

B) Fixing of the gallium, after evaporation of the solvent and hydration of the resin, by passing a sodium aluminate solution taken directly from the Bayer cycle and kept at a temperature of between 30°C and 60°C over said resin.

C) Elution of the gallium, after washing the resin with water, with a strong mineral acid and preferably sulphuric acid, the concentration of which is adjusted between 0.7N and 7N.

D) First purification and concentration of the gallium by precipitation in a reducing medium to the gallium hydroxide state and hydrochloric redissolution in the form of gallium chloride.

E) Second purification and concentration of the gallium in the chloride state by extraction using an organic solution based on tributylphosphate and elution with water.

F) Electrolysis of the concentrated and purified gallium chloride solution in order to obtain metallic gallium having a purity of 4N.

2. An extraction and purification process according to Claim 1, characterised in that the porous adsorbent resin is a polystyrene resin having a non-polar and hydrophobic nature.

3. An extraction and purification process according to Claims 1 and 2, characterised in that the porous adsorbent resin is impregnated with 7-alkyl 8-hydroxyquinoline as extracting agent in a porportion of 150 grammes to 400 grammes of said extracting agent per litre of dry resin.

4. An extraction and purification process according to Claims 1 to 3, characterised in that the extracting agent is dissolved in a volatile solvent to which a surface-active agent is added in a proportion of from 5 to 15% of its weight.

5. An extraction and purification process according to Claim 4, characterised in that the surface-active agent is a quaternary ammonium chloride having the formula $R_3CH_3NCl$ in which R contains between 8 and 10 carbon atoms.

6. An extraction and purification process according to Claims 1 to 5, characterised in that the porous adsorbent resin is ready for use after impregnation, drying and hydration.

7. An extraction and purification process according to Claims 1 to 6, characterised in that the solution of sodium aluminate taken from the Bayer cycle after the decomposition stage has a gallium concentration of between 150 mg and 500 mg per litre of solution, a total soda concentration expressed as $Na_2O$ of between 100 g and 220 g per litre of solution, a concentration of dissolved $Al_2O_3$ of between 50 g and 130 g per litre of solution.

8. An extraction and purification process according to Claims 1 to 7, characterised in that the resin which is ready for use is brought into contact for 4 to 12 hours with the sodium aluminate solution circulating at a temperature which is preferably about 50°C and at an hourly flow rate of 2 to 10 times the apparent volume of contacted resin.

9. An extraction and purification process according to Claims 1 to 8, characterised in that, after washing of the resin with 1 to 3 times its volume of water, the gallium fixed on the resin is redissolved as it issues from a double elution operation at about 50°C with a strong acid, preferably sulphuric acid, at a concentration which is firstly between 0.7N and 1.2N and then at a concentration of between 4N and 7N.

10. An extraction and purification process according to Claims 1 to 9, characterised in that the acid solution of eluted gallium contains from 1 to 20 g of gallium per litre and, as main impurities, Al, Fe, Zn and Na in solution.

11. An extraction and purification process according to Claim 10, characterised in that, to said acid solution of eluted gallium, there can be added, in any proportion, impure acid solutions also containing from 1 to 20 grammes of gallium and originating from other gallium recovery processes such as acid solutions from the extraction of gallium by liquid-liquid means from alkaline liquors containing it and the acid solutions which attack the gallium-containing waste based on gallium arsenide.

12. An extraction and purification process according to Claims 1, 10 and 11, characterised in that the acid solutions of gallium containing sulphuric acid are pre-neutralised to pH = 2 by milk of lime or calcium carbonate to precipitate the calcium sulphate at about 60°C, which is eliminated after filtration.

13. An extraction and purification process according to Claims 1, 10, 11 and 12, characterised in that the acid solutions of gallium which contain no free sulphuric acid are mixed with the recycled solutions which are partially depleted in gallium and originate from the downstream stages of purification, concentration and electrolysis stages, then neutralised by sodium hydroxide in the presence of sodium thiosulphate in order to precipitate at about 60°C the gallium hydroxide which is separated by decantation and/or filtration and is redissolved by HCl in the state of gallium chloride.

14. An extraction and purification process according to Claims 1, 10 to 13, characterised in that the acid solution of gallium chloride is brought into contact, at ambient temperature, with an organic solution formed by a mixture of tributylphosphate in a proportion of 25% by weight, of a C8 to C13 alcohol in a proportion of 10% by weight and a heavy aromatic solvent in a proportion of 65% by weight, until the organic solution is saturated in gallium.

15. An extraction and purification process according to Claim 14, characterised in that the ratio of the volume of organic solution to the volume of the acid solution of gallium chloride is about 0.8 when the gallium concentration of this solution is at least 30 g/litre.

16. An extraction and purification process according to Claims 1, 14 and 15, characterised in that the gallium-containing organic solution, after being placed in contact with the acid solution of gallium chloride and prior to elution with water, is washed in a counter-current with an aliquot of the gallium-containing aqueous phase issuing from the subsequent elution stage.

17. An extraction and purification process according to Claims 1 and 14 to 16, characterised in that, after counter-current washing, the gallium-containing aqueous phase aliquot is mixed with the acid solution of gallium chloride issuing from upstream, before the stage of extraction with the organic solution.

18. An extraction and purification process according to Claims 1 and 14 to 17, characterised in that the organic solution which is loaded with gallium after counter-current washing is eluted with water to form, on the one hand, an organic solution which can be regenerated and re-used after washing and, on the other hand, an aqueous eluate having a high concentration of gallium in the chloride state, of which an aliquot part is removed for counter-current washing of the gallium-containing organic solution and the remaining fraction is intended for electrolysis.

19. An extraction and purification process according to Claims 1, 14 and 15, characterised in that the gallium-containing organic solution, after being brought into contact with the acid solution of gallium chloride, it is eluted directly with water to form, on the one hand, a regeneratable organic solution and an aqueous eluate having a high concentration of gallium, in the chloride state, intended for electrolysis.

20. An extraction and purification process according to Claims 1 and 14 to 19, characterised in that the aqueous eluate, having a high concentration of gallium in the chloride state has a pH $\leq$ 2.

21. An extraction and purification process according to Claims 1 and 14 to 20, characterised in that the aqueous eluate is electrolysed over a liquid gallium cathode to produce metallic gallium having a purity of 4N and an electrolyte solution which is impoverished in gallium and is recycled to stage D) of precipitation of the gallium hydroxide.

22. An extraction and purification process according to Claims 1, 14 and 15, characterised in that the acid solution of gallium chloride which is impoverished in gallium after the first extraction carried out by the organic solution is brought into contact with the organic solution for a second time in order to extract the residual gallium which, after elution with water, is recycled to stage D) for precipitation of the gallium hydroxide.

23. An extraction and purification process according to Claims 1 to 22, characterised in that the reagents used in the process according to the invention are recycled to a stage of the actual process or to a stage of the Bayer cycle for the production of alumina.

FIG.1

**FIG.2**

**FIG.3**